Europäisches Patentamt

European Patent Office

Office européen des brevets

(11) Veröffentlichungsnummer: **0 301 434**
**A1**

(12) **EUROPÄISCHE PATENTANMELDUNG**

(21) Anmeldenummer: **88111856.6**

(22) Anmeldetag: **22.07.88**

(51) Int. Cl.⁴: **A23L 1/212 , A23G 3/00**

(30) Priorität: **27.07.87 DE 8710272 U**

(43) Veröffentlichungstag der Anmeldung:
**01.02.89 Patentblatt 89/05**

(84) Benannte Vertragsstaaten:
**AT BE CH DE ES FR GB GR IT LI LU NL SE**

(71) Anmelder: **Schwarz, Günter, Dipl.-Chem.**
**Münchner Strasse 31**
**D-8225 Traunreut(DE)**

(72) Erfinder: **Schwarz, Günter, Dipl.-Chem.**
**Münchner Strasse 31**
**D-8225 Traunreut(DE)**

(74) Vertreter: **Zeitler, Giselher, Dipl.-Ing.**
**Herrnstrasse 15**
**D-8000 München 22(DE)**

(54) **Fruchtriegel.**

㊼ Bei einem Fruchtriegel, der wenigstens aus einer eine feste Konsistenz aufweisenden Mischung aus Obst bzw. Obstmark, Zucker und gehackten Nüssen (1) und/oder Mandeln besteht, ist vorgesehen, daß er eine langgestreckte stabartige Wurstform (2) endlicher Länge aufweist.

Fig.1

EP 0 301 434 A1

## Fruchtriegel

Die Erfindung betrifft einen Fruchtriegel gemäß dem Oberbegriff des Anspruchs 1.

Ein solcher Fruchtriegel besteht üblicherweise aus einer Mischung aus Obst bzw. Obstmark, Zucker und gehackten Nüssen und/oder Mandeln sowie anderen Zutaten, wobei die auf dem Markt bekannten Fruchtriegel in einer solchen Raumform in den Verkehr gelangen, bei der sie bereits in eßbare, kleine Portionen, meistens in Stäbchenform, unterteilt sind und beidseitig eine Oblatenschicht aufweisen, um das unerwünschte Aneinanderhaften zweier Fruchtriegel zu unterbinden.

Die Nachteile einer solchen Ausgestaltung der bekannten Fruchtriegel sind darin zu sehen, daß diese eine relativ aufwendige Fertigung aufweisen. Es muß nämlich bei der Herstellung die fertig zubereitete Fruchtriegelmasse zuerst in handliche kleine, d.h. mundgerechte Eßportionen unterteilt werden, was eines beträchtlichen maschinellen Aufwandes bedarf. Hinzu kommt außerdem, daß danach die in die gewünschte Größe unterteilten Portionen der Fruchtriegel beidseitig mit der üblichen Oblatenschicht versehen werden müssen, was einen weiteren Fertigungsvorgang darstellt, der naturgemäß den Kostenaufwand erhöht.

Der oben geschilderten Raumform der bekannten Fruchtriegel ist außerdem der Nachteil eigen, daß deren Handhabung auf dem Weg von der Fertigungsstätte zur Verkaufsstätte zu wünschen übrig läßt, da diese Fruchtriegel ja in der erwähnten Weise in kleine, mundgerechte Portionen unterteilt sind und somit entweder bereits fertig verpackt oder auf andere Weise gebündelt bzw. zu Verkaufseinheiten zusammengefaßt sein müssen, um eine wirtschaftliche Handhabung überhaupt erst zu ermöglichen. Diese nachteilige Eigenschaft der bekannten Fruchtriegel bringt demgemäß auch Lagerungsprobleme mit sich.

Der Erfindung liegt daher die Aufgabe zugrunde, den Fruchtriegel der gattungsgemäßen Art zur Beseitigung der geschilderten Nachteile derart auszugestalten, daß er sich einfach sowie schnell fertigen läßt und eine leichte Handhabung sowie gute Lagerungsmöglichkeit gewährleistet. Schließlich soll der zu schaffende Fruchtriegel auch derart ausgestaltet sein, daß er sich behinderungsfrei in gewünschter Weise portionieren läßt.

Die Merkmale der zur Lösung dieser Aufgabe geschaffenen Erfindung ergeben sich aus Anspruch 1. Vorteilhafte Ausgestaltungen hiervon sind in den weiteren Ansprüchen beschrieben.

Dadurch, daß der erfindungsgemäß ausgestaltete Fruchtriegel eine langgestreckte stabartige Wurstform endlicher Länge aufweist, ist der entscheidende Vorteil gegeben, daß sich die Fertigung besonders einfach gestaltet, da es nicht mehr erforderlich ist, noch einen zusätzlichen Arbeitsvorgang vorzusehen, um beispielsweise eine das Aneinanderhaften mehrerer kleiner Fruchtriegel verhindernde Oblatenschicht aufzubringen. Der wurstförmig ausgestaltete Fruchtriegel, der einen runden Querschnitt, aber auch einen mehreckigen, beispielsweise einen drei- oder viereckigen Querschnitt, besitzen kann, läßt sich in besonders einfacher Weise dadurch in mundgerechte Portionen unterteilen. Dies erfolgt dadurch, daß die stabartige Wurstform - ähnlich wie bei einer übliche Wurst aus Fleisch oder dgl. - mit dem Messer in Scheibe unterteilt wird bzw. daß hiervon mund-bzw. eßgerechte Portionen von gewünschter Größe abgetrennt werden.

Die erfindungsgemäß vorgesehene Wurstform des Fruchtriegels erbringt außer einer einfacheren sowie schnellen Fertigungsmöglichkeit den weiteren entscheidenden Vorteil, daß sich ein solcher Fruchtriegel aufgrund seiner kompakten Größe problemlos lagern und außerdem auch leicht handhaben läßt. Diese leichtere Handhabung beinhaltet auch den Vorteil, daß der Transport von der Fertigungs- zur Verkaufsstätte sowie auch jeder beliebige Transport vor dem Verzehr des Fruchtriegels erleichtert ist, da sich ja noch sämtliche später vom Fruchtriegel abzuteilenden mundgerechte Eßportionen gleichsam in einem Stück in Form der stabartigen Fruchtriegelwurst befinden.

Es liegt schließlich im Rahmen der Erfindung, die Oberfläche der Wurstform des Fruchtriegels mit einer Abdeckschicht zu versehen. Diese Abdeckschicht kann beispielsweise aus Zucker in beliebiger Form oder aber auch aus einer Verpackungsfolie und dgl. bestehen.

Die Erfindung wird im folgenden anhand der Zeichnung näher erläutert. Diese zeigt in:

Fig. 1 schematisch perspektivisch den Fruchtriegel gemäß der Erfindung in querschnittlich kreisrunder Wurstform mit zwei abgetrennten Eßportionen;

Fig. 2 den Fruchtriegel in querschnittlich quadratischer Wurstform und

Fig. 3 den Fruchtriegel in querschnittlich dreieckiger Wurstform.

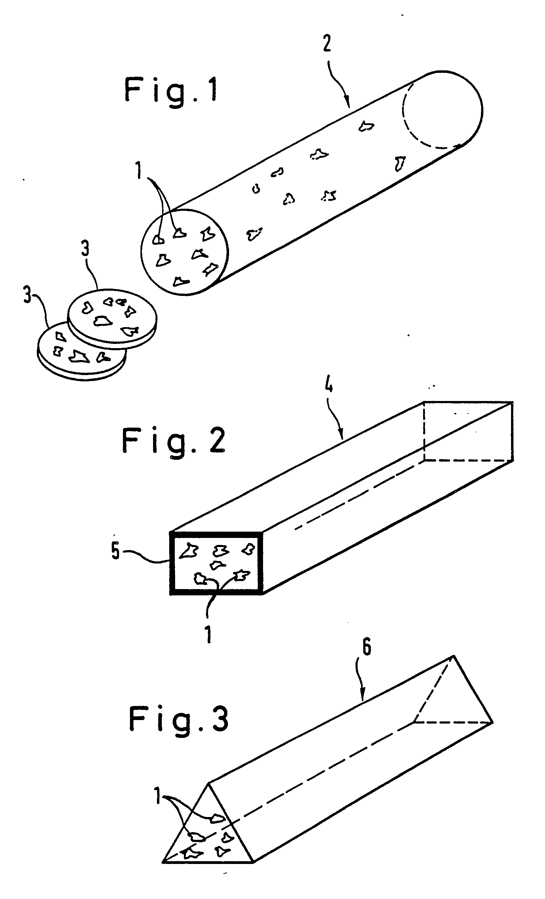

Wie aus der Zeichnung, insbesondere aus Fig. 1, ersichtlich, weist der dargestellte Fruchtriegel, der wenig stens aus einer eine feste Konsistenz aufweisenden Mischung aus Obst bzw. Obstmark, Zucker und gehackten Nüssen 1 und/oder Mandeln besteht, eine langgestreckte stabartige Wurstform 2 endlicher Länge auf, wobei bei dem Ausführungsbeispiel gemäß Fig. 1 die Wurstform 2 einen kreisrunden Querschnitt hat. Mit dem Begriff "endliche Länge" der Wurstform 2 ist jede Längenerstreckung gemeint, die gut handhabbar und transportierbar ist sowei eine problemlose Lagerung der Fruchtriegelwurstform 2 gestattet. Im Rahmen der beschriebenen Wurstform 2 des Fruchtriegels kann dieser demnach beispielsweise eine Länge von minimal 5 - 8 cm bis zu maximal 20 - 30 cm aufweisen. Selbstverständlich ist aber auch bei Vorliegen spezieller Umstände jede andere Längenerstreckung möglich.

Wie aus Fig. 1 weiterhin ersichtlich, lassen sich von der Wurstform 2 des Fruchtriegels in einfacher Weise dadurch mundgerechte Eßportionen 3 abteilen, daß mit einem Messer entsprechend dicke Scheiben abgetrennt werden, die dann dem Verzehr zugänglich sind.

Bei der abgewandelten Ausführungsform gemäß Fig. 2 hat die dargestellte Wurstform 4 einen viereckigen Querschnitt. Dies erbringt den zusätzlichen Vorteil, daß sich die Lagerung besonders problemlos gestaltet, da ein derartiger Querschnitt einerseits eine raumsparende Lagerung ermöglicht und andererseits keinerlei Probleme hinsichtlich eines Verrutschens und dgl. beinhaltet. Wie ersichtlich, ist die querschnittlich viereckige Wurstform 4 an ihrer Oberfläche mit einer Abdeckschicht 5 versehen. Diese kann aus einem eßbaren Material, beispielsweise Zucker in Kristall- oder Puderform bestehen; sie kann aber auch aus jedem anderen Material gebildet sein und beispielsweise eine Verpackungsfolie oder dgl. sein.

Bei der weiterhin abgewandelten Ausführungsform gemäß Fig. 3 weist die dargestellte Wurstform 6 schließlich einen dreieckigen Querschnitt auf, wobei sich ähnliche Lagerungsvorteile wie bei der Ausführungsform gemäß Fig. 2 ergeben, ohne daß die bei der Fertigung, Handhabung und Portionierbarkeit erzielten Vorteile beeinträchtigt werde.

Der Vollständigkeit halber sei noch darauf hingewiesen, daß dem Fruchtriegel außer den beschriebenen Querschnittsformen auch noch jede andere gewünschte Querschnittsform erteilt werden kann, also außer einer kreisrunden beispielsweise eine ovale bzw. elliptische Querschnittsform sowie eine rosettenförmige, sternförmige usw.

Auch die Abdeckschicht 5 kann anders als beschriben zusammengesetzt sein und beispielsweise aus Schokolade und/oder gemahlenen Nüssen bzw. Mandeln bestehen.

Die Erfindung erstreckt sich schließlich auch auf einen solchen Fruchtriegel, der die Form einer von einer der beschriebenen Wurstformen abgetrennten Scheibe 3 aufweist.

## Ansprüche

1. Fruchtriegel, wenigstens bestehend aus einer eine feste Konsistenz aufweisenden Mischung aus Obst bzw. Obstmark, Zucker und gehackten Nüssen und/oder Mandeln, **dadurch gekennzeichnet**, daß er eine langgestreckte stabartige Wurstform (2, 4, 6) endlicher Länge aufweist.

2. Fruchtriegel nach Anspruch 1, **dadurch gekennzeichnet**, daß die Wurstform (2) einen runden, insbesondere kreisrunden oder ovalen, Querschnitt besitzt.

3. Fruchtriegel nach Anspruch 1, **dadurch gekennzeichnet**, daß die Wurstform einen rosetten- bzw. sternförmigen Querschnitt besitzt.

4. Fruchtriegel nach Anspruch 1, **dadurch gekennzeichnet**, daß die Wurstform (4, 6) einen mehreckigen, insbesondere drei- oder viereckigen, Querschnitt besitzt.

5. Fruchtriegel nach einem der Ansprüche 1 bis 4, **dadurch gekennzeichnet,** daß die Oberfläche der Wurstform (2, 4, 6) mit einer Abdeckschicht (5) versehen ist.

6. Fruchtriegel nach Anspruch 4, **dadurch gekennzeichnet**, daß die Abdeckschicht (5) kristall- oder puderförmig ist.

7. Fruchtriegel nach einem der Ansprüche 1 bis 6, **dadurch gekennzeichnet**, daß die Wurstform (2, 4, 6) in einzelne Scheiben (3) unterteilt ist.

Fig.1

Fig.2

Fig.3

Europäisches Patentamt

EUROPÄISCHER RECHERCHENBERICHT

Nummer der Anmeldung

EP 88 11 1856

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-E- 95 696 (J. DUNGLER) <br> * Seite 1, Zeilen 1-5; Seite 2, Zeilen 3-7; Seite 3 * <br> --- | 1-7 | A 23 L 1/212 <br> A 23 G 3/00 |
| X | GB-A-1 571 251 (M. HANSSEN) <br> * Seite 1, Zeilen 79-100; Seite 2, Zeilen 42-48; Ansprüche 1,2,9 * <br> ----- | 1 | |

RECHERCHIERTE SACHGEBIETE (Int. Cl.4)

A 23 L 1/00
A 23 G 3/00

Der vorliegende Recherchenbericht wurde für alle Patentansprüche erstellt

| Recherchenort | Abschlußdatum der Recherche | Prüfer |
|---|---|---|
| DEN HAAG | 14-09-1988 | LEPRETRE F.G.M.J. |